(19) Europäisches Patentamt
European Patent Office
Office européen des brevets

(11) **EP 2 496 914 B1**

(12) **FASCICULE DE BREVET EUROPEEN**

(45) Date de publication et mention de la délivrance du brevet:
**03.08.2016 Bulletin 2016/31**

(21) Numéro de dépôt: **10788363.9**

(22) Date de dépôt: **28.10.2010**

(51) Int Cl.:
***G01D 5/14*** *(2006.01)*

(86) Numéro de dépôt international:
**PCT/FR2010/052320**

(87) Numéro de publication internationale:
**WO 2011/055064 (12.05.2011 Gazette 2011/19)**

(54) **CAPTEUR DE POSITION MAGNETIQUE BIDIRECTIONNEL À ROTATION DE CHAMP**

BIDIREKTIONALER MAGNETISCHER POSITIONSSENSOR MIT ROTIERENDEM MAGNETFELD

BIDIRECTIONAL MAGNETIC POSITION SENSOR HAVING FIELD ROTATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.11.2009 FR 0905356**

(43) Date de publication de la demande:
**12.09.2012 Bulletin 2012/37**

(73) Titulaire: **Moving Magnet Technologies**
**25000 Besançon (FR)**

(72) Inventeurs:
• **MASSON, Gérald**
**F-25000 Besançon (FR)**
• **DORGE, Thierry**
**F-25610 Arc et Senans (FR)**

(74) Mandataire: **IP Trust**
**2, rue de Clichy**
**75009 Paris (FR)**

(56) Documents cités:
**EP-A2- 1 074 818    FR-A1- 2 893 410**
**FR-A1- 2 923 903**

## Description

### DOMAINE TECHNIQUE DE L'INVENTION

La présente invention concerne le domaine des capteurs de position magnétiques sans contact dont le but est de fournir simultanément deux signaux de sortie indépendants représentatifs d'une position suivant 2 directions (translation et translation, translation et rotation, rotation et rotation).
Les capteurs qui détectent la position à partir d'un champ magnétique ont de nombreux avantages :

- pas de contact mécanique avec la partie mobile, et donc pas d'usure,

- insensibilité à la saleté,

- coût de production réduit,

- longue durée de vie.

La plupart des capteurs magnétiques de position sans contact sont suivant une seule direction (une rotation OU une translation) mais on voit apparaitre de plus en plus d'applications où un capteur selon deux directions (capteur bidirectionnel) est nécessaire comme par exemple pour détecter la position d'organes de transmission ou généralement une rotation et une translation sont combinées. Dans de telles applications il est plus particulièrement important d'avoir une information de position selon une direction qui n'est pas dépendante de la position selon l'autre direction (signaux de sortie indépendants).

### ETAT DE LA TECHNIQUE ANTERIEURE

La majorité des capteurs bidirectionnels déjà existants utilise des aimants permanents associés à un circuit magnétique, plus ou moins complexe, fait de matériau ferromagnétique utilisé pour guider et/ou concentrer le flux magnétique généré par le ou les aimants permanents mais cela au détriment du coût et des performances du capteur.

Ainsi, on connait dans l'état de la technique, le brevet FR2786266 de la demanderesse, relatif à un capteur de position selon deux directions, mais dans lequel l'encombrement et la surface de l'aimant utilisé limitent l'utilisation pratique de ce capteur pour les grandes courses. Ce capteur présente également un hystérésis important dû aux stators ferromagnétiques et la mesure dépend de la variation de l'induction rémanente qui doit donc être compensée.

Par ailleurs, Le brevet européen EP800055 décrit un capteur de positions linéaire et angulaire. Ce capteur délivre des signaux analogiques difficilement exploitables car non linéaires, de faible niveau. De tels capteurs ont besoin de plusieurs points de mesure disjoints pour mesurer la position relative suivant deux directions. De plus ils nécessitent des pièces statoriques qui apportent de l'hystérésis et les éléments sensibles mesurent l'amplitude du champ et sont donc sensibles aux tolérances géométriques et à la température.

Les brevets US4639667 ou WO9716736 décrivent des capteurs fonctionnant selon des principes ne permettant pas de délivrer des signaux linéaires et indépendants, représentatifs de la position dans deux dimensions.

Il existe également des capteurs bidirectionnels qui ne sont que la mise bout à bout de deux capteurs unidirectionnels indépendants, comme par exemple le brevet WO 2008138662 et le brevet US6175233 décrivant 2 capteurs linéaires qui mesurent chacun une seule direction. Pour chaque capteur il y a un aimant et un élément de détection du champ magnétique, ce qui a pour conséquence de conduire à un encombrement important et un coût de réalisation élevé. De plus, ces capteurs mesurent l'amplitude du champ et sont donc eux aussi sensibles aux tolérances géométriques et à la température.

On connait également dans l'état de la technique les brevets US 7421923 et US 7293480 qui sont des capteurs de détection des vitesses enclenchées par un levier de vitesse. De tels brevets présentent une solution pour détecter des positions selon 2 directions mais ils utilisent un aimant et au moins autant de capteurs de Hall positionnés dans l'espace qu'il n'y a de vitesse à détecter. Il est donc nécessaire de mettre en oeuvre un réseau de capteurs pour discriminer des positions uniques et obtenir une détection digitale des vitesses. La multiplication des capteurs fait que cette solution est coûteuse à mettre en oeuvre et n'offre pas de moyens de connaitre les positions intermédiaires.

Pour remédier aux problèmes liés à la détection de position par mesure d'amplitude décrit ci-dessus, il existe des capteurs de position qui mesurent la rotation du champ magnétique, autrement dit sa direction, et non plus son amplitude. Cependant, cela s'applique principalement à des capteurs unidirectionnels et non bidirectionnels.

On connait par exemple dans l'état de la technique des capteurs tels que décrits dans les brevets FR 2898189 et FR 2909170 de la demanderesse qui utilisent la direction du champ et non l'amplitude pour détecter une position relative entre un aimant et une sonde magnétosensible. Cette mesure de direction permet d'être insensible à la température et aux jeux mécaniques et ne met pas en oeuvre de pièce ferromagnétique et ne présente donc pas d'hystérésis magnétique. Cependant, de tels capteurs ne mesurent qu'une seule direction de champ magnétique via le calcul d'un seul rapport d'amplitude à partir de 2 composantes du champ magnétique, et ne peuvent donc connaitre la position relative d'un aimant mobile par rapport a une sonde magnétosensible que suivant une direction et non deux. De même, les brevets et demandes de brevet US6731108, US6960974 et WO2004015375 permettent uniquement la mesure du déplacement linéaire d'un aimant par rapport à un ou plusieurs éléments magnétosensibles en utilisant la direction de champ. Cependant, pour une réalisation pratique des courses supérieures à 20-25 mm, ces capteurs nécessitent plusieurs sondes placées sur les différentes parties de la course, ce qui augmente le coût du capteur et nécessite un positionnement précis des sondes.

On connait cependant dans l'état de la technique des solutions permettant une mesure de position bidirectionnelle et utilisant la mesure de la rotation et non de l'amplitude du champ magnétique, mais dans le cas d'applications très spécifiques aux leviers de commande (joysticks). Ainsi, les demandes de brevet US 20070242043 ou US 20090062064 décrivent des capteurs pour joystick qui comprennent un simple aimant aimanté uni-directionnellement, selon son épaisseur et une sonde qui mesure uniquement 2 composantes du champ et donc une seule direction de champ (angle formé par les 2 composantes). Ce principe ne permet pas de délivrer des signaux linéaires indépendants suivant 2 directions. Les systèmes de type joystick sont de plus limités uniquement à des rotations et ne peuvent pas mesurer des translations. Par ailleurs, l'angle qui peut être détecté par un tel système joystick est limité à une trentaine de degrés. Au-delà, l'aimant se retrouve très éloigné de la sonde qui ne voit plus assez de champ magnétique pour en déduire une position. De fait, pour une réalisation pratique pour des courses supérieures à 40 degrés, ces capteurs nécessitent plusieurs sondes placées sur les différentes parties de la course, ce qui augmente le coût du capteur.

On trouve également dans l'état de l'art une note d'application de Melexis pour une mesure de 2 angles de rotation (http://www.melexis.com/Sensor ICs Hall effect/Triaxis Hall ICs/MLX90333 648.aspx) où 2 configurations de Joystick sont présentées. La première est une solution où le centre de rotation de l'aimant bipolaire est confondu avec le point de mesure ce qui nécessite un système mécanique complexe et encombrant, non facilement intégrable dans une application. La seconde configuration présente une solution où le centre de rotation de l'aimant se trouve derrière l'aimant (l'aimant est entre son centre de rotation et les éléments sensibles). Dans ce cas, les 3 composantes du champ magnétique sont utilisées pour déterminer 2 angles de rotation. L'aimant utilisé est un cylindre de très faible diamètre avec une aimantation constante en amplitude et en direction suivant son épaisseur. C'est-à-dire que l'aimantation de l'aimant en tout point de cet aimant a le même module et est perpendiculaire à la face supérieure et inférieure de l'aimant. Cette configuration très spécifique est uniquement destinée à la mesure de deux angles et pour de très faible course (une trentaine de degrés). En effet, pour pouvoir détecter la rotation de l'aimant avec l'algorithme utilisé, il faut que le diamètre de l'aimant soit petit (théoriquement un aimant ponctuel avec une aimantation radiale), ce qui signifie que dès que nous avons une petite rotation de l'aimant, l'aimant s'éloigne des éléments magnéto-sensibles et l'induction magnétique devient trop faible au niveau des éléments magnéto-sensibles de la sonde pour avoir une détection précise de la rotation de l'aimant. C'est pourquoi ce genre de système nécessite un aimant à très forte rémanence (typiquement Br>1.2T) et très épais (épaisseur >10mm), qui coute donc cher et est difficile à aimanter, avec qui plus est une épaisseur axiale importante (typiquement >10mm) qui engendre un problème d'encombrement. De plus, avec ces solutions, l'entrefer mécanique entre la surface de l'aimant plane et le point de mesure varie en fonction des rotations de l'aimant ce qui implique une détérioration de la linéarité et un entrefer plus grand que nécessaire pour éviter la collision des bords de l'aimant avec le support de la sonde. L'idéal pour éviter cela est un aimant de très faible diamètre mais qui pose les problèmes déjà évoqués ci-dessus.

## EXPOSE DE L'INVENTION

L'invention ici présentée se propose donc notamment de remédier de manière simple et performante aux problèmes des capteurs bidirectionnels exposés ci-dessus (course limitée, mesure de rotations seulement, aimants de forte rémanence et épais, encombrement et coût importants...)

En particulier, nous proposons un capteur de position absolu suivant 2 directions quelconques (translation-translation, translation-rotation ou rotation-rotation) mesurant le déplacement relatif entre un élément aimanté et une sonde magnéto-sensible mesurant au moins 2 composantes du champ magnétique sensiblement au même point, et ce sans limitation haute ou basse de courses et utilisant préférentiellement la mesure de la direction du champ magnétique et non de son amplitude.

Plus précisément, nous proposons un capteur magnétique de position suivant au moins deux directions comportant au moins un élément aimanté (1) et une sonde (6) comportant au moins deux éléments magnéto-sensibles (2) et (3) localisés sensiblement au même point et mesurant chacun une des composantes du champ magnétique généré par le dit élément aimanté (1), l'élément aimanté (1) étant mobile relativement aux dits éléments magnéto-sensibles (2) et (3), et au moins un circuit de traitement (5) apte à effectuer des calculs d'angles et de modules à partir de combinaisons algébriques des composantes du champ magnétique et fournissant au moins deux signaux indépendants représentatifs de la position de l'élément mobile selon respectivement l'une et l'autre des deux directions, caractérisé en ce que le vecteur aimantation de l'élément aimanté (1) est variable par rapport au vecteur normal à la surface de l'élément aimanté disposée en regard de la sonde (6) selon au moins une des dimensions dudit élément aimanté de sorte à définir une position unique de ladite sonde (6) vis-à-vis dudit élément aimanté (1).

Cette variation du vecteur aimantation peut être obtenue par la variation de sa direction selon au moins une de ses dimensions. Dans ce cas, la direction du vecteur aimantation peut présenter plusieurs périodes sur la course mesurée.

Cette variation du vecteur aimantation peut aussi être obtenue par la variation d'une des dimensions de l'élément aimanté selon au moins une des deux directions induisant une variation de la direction du vecteur normal à la surface. Dans ce cas, la dimension peut varier selon une fonction discontinue ou suivant une fonction continue de type sinusoïdale.

Cette variation du vecteur aimantation peut aussi être obtenue par la variation de son amplitude selon au moins une des deux directions.

Dans tous ces cas, le vecteur d'aimantation présente au moins une alternance de sens suivant au moins une des deux directions.

Dans tous ces cas, le circuit de traitement du signal peut réaliser au moins 2 calculs d'arc tangente ou au moins un calcul d'arc tangente et un calcul de module.

Dans tous ces cas, le circuit de traitement du signal peut aussi réaliser un calcul d'arc tangente du rapport de deux composantes du champ magnétique après avoir appliqué un coefficient correcteur entre ces deux composantes.

Dans une variante de l'invention, le circuit du traitement est intégré avec les éléments magnétosensibles dans un seul composant.

Dans une variante de l'invention, l'élément aimanté est constitué d'un aimant permanent et d'au moins une pièce ferromagnétique.

Enfin, de façon préférentielle, les composantes du champ magnétique mesurées varient de façon sensiblement sinusoïdale suivant chacune des au moins deux directions.

De façon générale, ce capteur présente un seul élément aimanté, préférentiellement un aimant permanent de type terre rare (SmCo, NdFeB) ou ferrite, de faible épaisseur et de longueur et largeur sensiblement équivalentes à la course désirée, sans autre limitation de course que la taille de l'aimant. Le fait que ce capteur n'utilise qu'une seule sonde magnéto-sensible mesurant les 3 composantes du champ magnétique en un seul point, permet ainsi de conduire à un encombrement minimal et un coût limité. Ce capteur utilise les rapports d'amplitudes entre les composantes du champ magnétique pour s'affranchir des variations des propriétés magnétiques de l'aimant en fonction de la température, du temps, et également pour ne pas être sensible aux tolérances géométriques et aux variations d'entrefer, ce qui permet de proposer une solution extrêmement robuste. Ce capteur ne présente pas de pièces ferromagnétiques fixes par rapport aux éléments magnéto-sensibles et donc aucun hystérésis magnétique tout en garantissant la simplicité de la structure. Enfin le capteur fournit une information de position indépendante pour chacune des 2 directions, et ceci avec une très grande précision.

Le fonctionnement du capteur est défini plus précisément comme suit :

Soit M le point où les éléments magnétosensibles sont regroupés et mesurent les 3 composantes du champ magnétique et O' le point milieu de la surface extérieure de l'élément aimante (1) qui est en vis-à-vis de la sonde (6) où sont intégrés les éléments magnétosensibles. Un point O sera utilisé dans le cas où au moins une des deux directions est une rotation avec, dans ce cas, O centre de rotation. Nous pouvons ainsi écrire la relation vectorielle suivante :

$$\overrightarrow{OM} = \overrightarrow{OO'} + \overrightarrow{O'A} + \overrightarrow{AM}$$

Le vecteur $\overrightarrow{OO'}$ est constant et dépend uniquement de la géométrie de l'aimant, la norme de ce vecteur correspond au rayon extérieur de l'aimant dans le cas d'un aimant tuile ou sphérique et est nulle dans le cas d'un aimant parallélépipédique.

Le vecteur $\overrightarrow{AM}$ est constant et est orienté suivant l'épaisseur de l'aimant soit $\overrightarrow{AM} = z_0 \, \vec{n}$ , $z_0$ est communément appelé entrefer ou airgap entre l'élément aimanté et le point M qui regroupe les éléments magnétosensibles.

On définit ainsi $\overrightarrow{OA} = x\vec{i} + y\vec{j}$ comme étant le vecteur qui représente la position de l'élément aimanté par rapport aux éléments magnétosensibles suivant les 2 directions de l'élément mobile qui sont orientées suivant $\vec{i}$ et $\vec{j}$. Par soucis de simplicité, les directions seront dénotées par la suite X et Y et correspondent aux déplacements respectivement suivant $\vec{i}$ et $\vec{j}$.

Les 2 directions X et Y peuvent ainsi être 2 translations où x et y correspondent à une longueur, ou peuvent être une translation et une rotation où x correspond alors à une longueur et y à un angle et enfin les 2 directions peuvent être 2 rotations où x et y correspondent tous deux à des angles.

Pour déterminer la position de l'élément aimanté par rapport aux éléments magnétosensibles suivant les 2 directions X et Y de l'élément mobile, il faut donc déterminer les coordonnées x et y.

D'une manière générale, que cela soit pour un aimant rectiligne, cylindrique ou sphérique, dans ce qui suit, l'épaisseur correspond à la dimension de l'aimant orientée selon le vecteur unitaire $\vec{n}$ normale à la surface supérieure de l'aimant, la longueur correspond à la dimension de l'aimant orientée par le vecteur $\vec{i}$ tangent à la surface supérieure de l'aimant et la profondeur correspond à la dimension de l'aimant orientée par le vecteur $\vec{j}$ également tangent à la surface supérieure de l'aimant et perpendiculaire au vecteur $\vec{i}$. Dans le cas d'un aimant rectiligne, cylindrique ou sphérique, le repère O,($\vec{i,j}$, $\vec{n}$) utilisé est respectivement un repère cartésien, polaire ou sphérique.

Selon un premier mode de réalisation, le capteur est constitué d'un élément aimanté (préférentiellement un aimant permanent) engendrant un champ magnétique dont la composante normale (suivant $\vec{n}$) d'une part, et les composantes tangentielle (suivant $\vec{i}$) et transversale (suivant $\vec{j}$) d'autre part, mesurées à sa surface, varient périodiquement (selon des périodes mécaniques de référence nommées λx et λy), la variation effective le long de la surface pouvant correspondre à une ou des période(s) entière(s) ou des fractions de période(s).

Selon une configuration préférée, l'élément aimanté présentera une longueur et une profondeur sensiblement voisines des courses utiles ainsi qu'une aimantation dont la direction varie de manière sensiblement linéaire suivant ses 2 directions X et Y et par rapport à son épaisseur, sa longueur ET sa profondeur.

Cela signifie qu'en tout point A de la surface extérieure de l'élément aimanté, l'angle entre le vecteur de magnétisation $\vec{M}$ et le vecteur normal $\vec{n}$ soit $(\vec{M},\vec{n})$ et l'angle entre le vecteur de magnétisation $\vec{M}$ et le vecteur $\vec{i}$ soit $(\vec{M},\vec{i})$ varient linéairement suivant la directions X ET que l'angle entre le vecteur de magnétisation $\vec{M}$ et le vecteur normal $\vec{n}$ $(\vec{M},\vec{n})$ et l'angle entre le vecteur de magnétisation $\vec{M}$ et le vecteur $\vec{j}$ varient linéairement suivant la direction Y.

Au voisinage de cet élément aimanté, cette aimantation engendre un champ magnétique $\vec{B}$ ($\vec{B}$=Bx$\vec{i}$ +By$\vec{j}$ + Bz$\vec{n}$) dont les composantes tangentielle (Bx), normale (Bn) et transversale (By), sont sensiblement sinusoïdales, sur une grande partie de la course suivant les directions X et Y.

Nous considérons donc un aimant de longueur Lx, de largeur Ly et d'épaisseur Lz, et M(x,y,$z_0$) un point de mesure des composantes Bx, By, Bz du champ magnétique engendré par l' élément aimanté.

+/-$y_{max}$ est la course maximale que nous voulons mesurer suivant la direction Y, $y_{max}$ étant inférieure, égale ou supérieure a la largeur de l'élément aimanté.

+/- $x_{max}$ est la course maximale que nous voulons mesurer suivant la direction X, $x_{max}$ étant inférieure, égale ou supérieure a la longueur de l'élément aimanté.

Nous voulons connaitre la position suivant X et Y soit x et y. $z_0$ correspond à l'entrefer de mesure entre l'élément mobile et l'élément fixe.

Les composantes By et Bz du champ magnétique ont la même phase suivant X, alors que la composante Bx est déphasée d'un quart de période. Dans ce 1$^{er}$ mode de réalisation, l'aimantation engendre un champ magnétique tel que nous pouvons écrire comme suit les composantes du champ magnétique en M(x,y, $z_0$):

- $Bx(x,y,z_0) = BxMAX * \cos(\frac{2\pi}{\lambda_x} * x + \phi) * \cos(\frac{2\pi}{\lambda_y} * y) * \frac{A}{z_0}$

- $By(x,y,z_0) = ByMAX * \sin(\frac{2\pi}{\lambda_x} * x + \phi) * \sin(\frac{2\pi}{\lambda_y} * y) * \frac{A}{z_0}$

- $Bz(x,y,z_0) = BzMAX * \sin(\frac{2\pi}{\lambda_x} * x + \phi) * \cos(\frac{2\pi}{\lambda_y} * y) * \frac{A}{z_0}$

Où λx et λy sont respectivement les longueurs d'onde pour laquelle le champ magnétique tourne de 360 degrés suivant respectivement X et Y et A une constante non nulle propre à chaque capteur qui dépend de l'entrefer entre la surface de l'élément aimanté et les éléments magnétosensibles ainsi que de la géométrie de l'élément aimanté.

Pour ce 1$^{er}$ mode de réalisation préféré, l'aimantation est normale au centre de l'aimant en O', et donc nous avons $\phi = \frac{\pi}{2}$. L'aimantation peut, par exemple, tourner de 360 degrés suivant X et Y. Cela signifie que l'aimantation tourne de 360 degrés sur la longueur de l'élément aimanté et de 360 degrés sur la largeur de l'élément aimanté, ce qui dans ce cas nous donne λx=Lx et λy =Ly. Nous avons alors en tout point M(x,y, $z_0$)au dessus de l'élément aimanté :

- Bx(x,y,$z_0$)= BxMAX *cos($\frac{2\pi}{L_x}$*x +$\frac{\pi}{2}$) * cos($\frac{2\pi}{L_y}$*y) *$\frac{A}{z_0}$

- By(x,y,$z_0$)= ByMAX *sin($\frac{2\pi}{L_x}$*x +$\frac{\pi}{2}$) * sin($\frac{2\pi}{L_y}$*y) *$\frac{A}{z_0}$

- Bz(x,y,$z_0$)= BzMAX *sin($\frac{2\pi}{L_x}$*x +$\frac{\pi}{2}$) * cos($\frac{2\pi}{L_y}$*y) *$\frac{A}{z_0}$

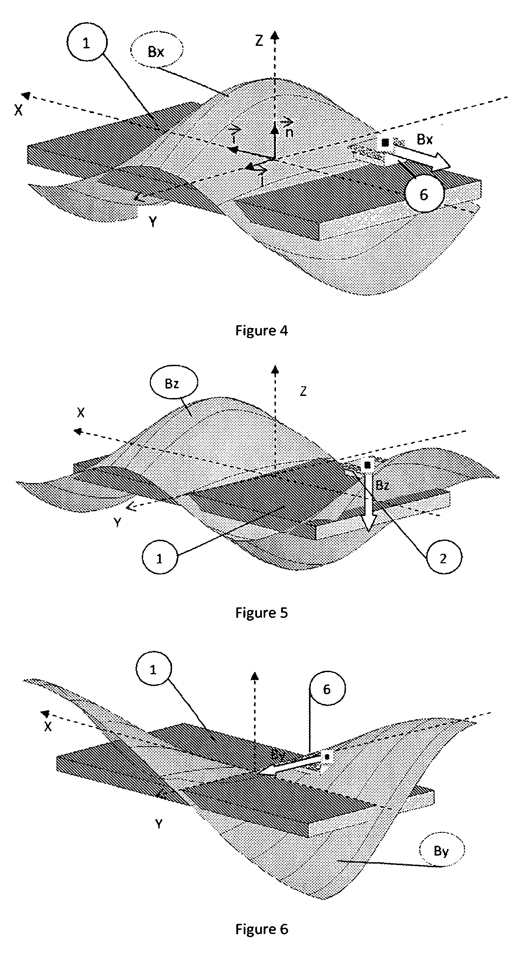

Bien entendu, selon le champ magnétique engendré par l'élément aimanté, la longueur d'onde λy peut être beaucoup plus grande que la largeur de l'élément aimanté Ly comme pour les figures 4, 5 et 6 où λy est plus grand que la largeur Ly ce qui signifie que le champ magnétique tourne de moins de 360 degrés sur la largeur de l'élément aimanté.

Si l'on mesure les composantes Bx, By et Bz du champ magnétique en un point M quelconque de l'espace qui entoure l'élément aimanté, il est possible de connaître la position suivant les directions X et Y, en appliquant les formules ci-dessous pour en déduire x et y. Cette mesure des 3 composantes magnétiques peut être réalisée par exemple par 3 éléments magnéto-sensibles localisés en un même point et intégrés dans un même package appelé sonde (6) en utilisant des composants de type MLX90333 ou HAL3625...

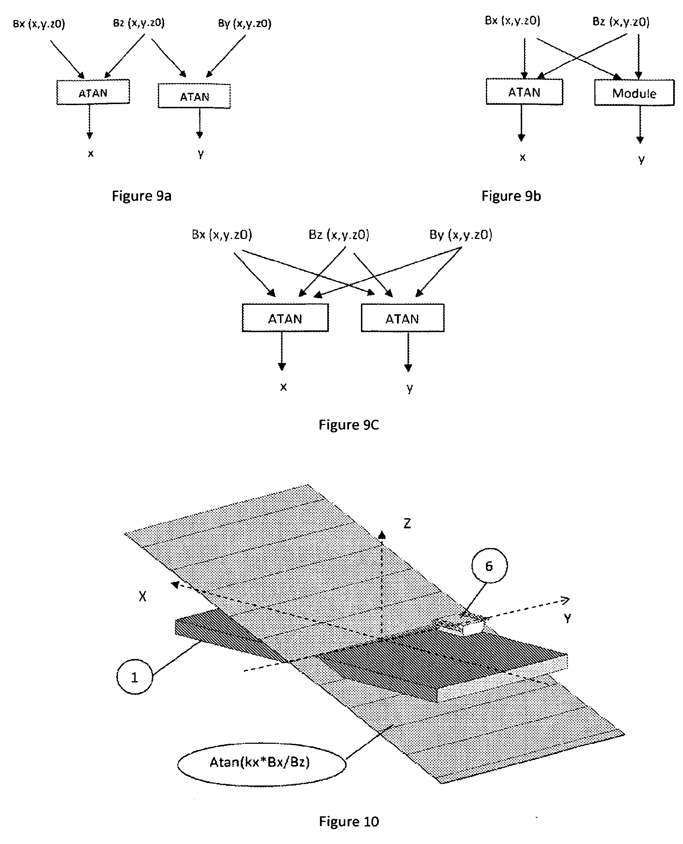

A partir de ces 3 composantes nous pouvons faire le calcul suivant (figure 9):

$$atan(kx\, ^{Bz}/_{Bx})$$

$$atan(ky\, ^{Bz}/_{By})$$

avec : Bx, By, Bz composantes du champ magnétique mesurées au point M de coordonnées x,y, z0 et kx, ky coefficients de gain correcteurs affectés à la mesure des composantes de champ pour normaliser les composantes. Ce calcul peut être réalisé a l'intérieur d'un composant unique qui comprend les éléments magneto-sensibles ou alors peut être réalisé par un élément extérieur à la sonde (microcontrôleur, micro-processeur, ECU...).

En appliquant ces formules on obtient :

$$atan(kx\, ^{Bz}/_{Bx}) = atan((kx*BzMAX*sin(\frac{2\pi}{L_x}*x +\frac{\pi}{2}) * cos(\frac{2\pi}{L_y}*y) *\frac{A}{z_0})/( BxMAX *cos(\frac{2\pi}{L_x}*x +\frac{\pi}{2}) * cos(\frac{2\pi}{L_y}*y)$$
$$*\frac{A}{z_0}))$$

$$=atan((kx* BzMAX*sin(\frac{2\pi}{L_x}*x +\frac{\pi}{2}))/ ((BxMAX *cos(\frac{2\pi}{L_x}*x +\frac{\pi}{2})))$$

$$= atan(kx* \frac{Bz_{MAX}}{Bx_{MAX}} * tan(\frac{2\pi}{L_x}*x +\frac{\pi}{2})$$

$$= \frac{2\pi}{L_x}*x +\frac{\pi}{2} \quad avec\ kx=\frac{Bx_{MAX}}{Bz_{MAX}}$$

Atan(kx Bz/Bx) est donc une fonction linéaire de variable x et son évaluation par calcul nous permet de déterminer la valeur x et donc la position suivant la direction X du point M par rapport au centre de l'élément aimanté O'. M étant le point où les éléments magnéto-sensibles sont placés, nous connaissons ainsi la position relative de l'élément aimanté par rapport aux éléments magnéto-sensibles. La position relative suivant X est donc indépendante de la température et de l'entrefer et peut être déterminée avec une précision importante (typiquement moins de 1% de la pleine course). Pour que cette sortie soit égale à 0 quand x=0 cela peut se faire via une programmation de la sonde (6) car la pente et l'ordonnée à l'origine dépendent de l'aimant et de son aimantation uniquement et sont donc programmables.

Nous pouvons calculer de même arctan(ky Bz/By)

$$atan(ky\, ^{Bz}/_{By}) = \frac{2\pi}{L_y}*y +\frac{\pi}{2} \quad avec\ ky =\frac{By_{MAX}}{Bz_{MAX}}$$

Ceci qui conduit à la position relative suivant la direction Y de l'élément aimanté par rapport aux éléments magnétosensibles comme expliqué précédemment pour la position suivant X.

Par conséquent une telle aimantation et un tel traitement des signaux comme décrit dans ce 1$^{er}$ mode de réalisation nous permettent de déterminer la position relative suivant 2 directions X et Y de l'élément aimanté par rapport aux éléments magnéto-sensibles à partir des 3 composantes du champ magnétiques mesurées en un même point M.

Nous pouvons également avec une même aimantation utiliser le post traitement suivant :

$$Atan[\frac{\sqrt{(Kz*Bz^2 + Ky*By^2)}}{Bx}] \text{ et } Atan[\frac{\sqrt{(Kz*Bz^2 + Kx*Bx^2)}}{By}]$$

Selon un deuxième mode de réalisation, La présente invention est constituée d'un élément aimanté (préférentiellement un aimant permanent) engendrant un champ magnétique dont la composante normale (suivant $\vec{n}$) d'une part, et les composantes tangentielle (suivant $\vec{i}$) et transversale (suivant $\vec{j}$) d'autre part, mesurées à sa surface, varie périodiquement (selon des périodes mécanique de référence nommée λx et λy), la variation effective le long de la surface pouvant correspondre à une ou des période(s) entière(s) ou des fractions de période(s).

Selon ce deuxième mode de réalisation, l'élément aimanté présentera une aimantation où la direction varie de manière sensiblement linéaire suivant uniquement 1 de ses 2 directions et par rapport à son épaisseur ET sa longueur.

Cela signifie qu'en tout point A de l'élément aimanté l'angle entre le vecteur de magnétisation $\vec{M}$ et le vecteur normal $\vec{n}$ soit $(\vec{M}, \vec{n})$ et l'angle entre le vecteur de magnétisation $\vec{M}$ et le vecteur $\vec{i}$ soit $(\vec{M}, \vec{i})$ varient linéairement suivant la direction X, mais que l'angle entre le vecteur de magnétisation $\vec{M}$ et le vecteur $\vec{j}$ est constant suivant la direction Y.

Ce 2eme mode de réalisation nécessite un élément aimanté de faible largeur (<30mm ou équivalent en angle ) pour, qu'au voisinage de cet élément aimanté, cette aimantation engendre un champ magnétique dont les composantes tangentielle (Bx), normale (Bn) et transversale (By) par rapport à l'aimant soient sensiblement sinusoïdales sur une grande partie de la course et soient de même forme que les composantes du 1$^{er}$ mode de réalisation. Un aimant peu large nous permet grâce aux effets de bords d'obtenir un champ magnétique en M qui varie suivant la direction Y sans pour autant que l'élément aimanté ait une aimantation variable suivant cette direction.

Pour ce 2$^{eme}$ mode de réalisation préféré, l'aimantation peut être normale, tangentielle ou autres au centre de l'aimant en O', et donc dans ce cas nous avons φ =[0 ;2π], l'aimantation peut tourner de 360 degrés suivant la direction X mais tournera de moins de 180 degrés suivant la direction Y ce qui nous donne par exemple λx=Lx et λy =2Ly.

Nous avons alors en tout point M(x,y,z$_0$) au dessus de l'élément aimanté :

- $Bx(x,y,z_0) = BxMAX * \cos(\frac{2\pi}{L_x}*x + \phi) * \cos(\frac{\pi}{L_y}*y) * \frac{A}{z_0}$

- $By(x,y,z_0) = ByMAX * \sin(\frac{2\pi}{L_x}*x + \phi) * \sin(\frac{\pi}{L_y}*y) * \frac{A}{z_0}$

- $Bz(x,y,z_0) = BzMAX * \sin(\frac{2\pi}{L_x}*x + \phi) * \cos(\frac{\pi}{L_y}*y) * \frac{A}{z_0}$

De la même manière que pour le 1$^{er}$ mode préféré, nous pouvons calculer atan(kx $Bz/Bx$) et atan(ky $Bz/By$) et ainsi obtenir : $Atan = \frac{2\pi}{L_x}*x + \phi$, la sortie de cette fonction variera de 2π sur la course de longueur Lx $Atan = \frac{\pi}{L_y}*y + \phi$, la sortie de cette fonction variera d'uniquement de π sur la course de longueur Ly

Nous pouvons également dans ce mode de réalisation, calculer l'arctangente pour déterminer la position suivant X et, connaissant cette position, nous pouvons utiliser uniquement la valeur de la composante By pour en déduire la position suivant Y. Ce post traitement a cependant le désavantage d'utiliser directement une composante ce qui signifie que cette solution sera sensible a la variation d'entrefer z0 et à la température mais convient très bien lorsqu'il n'y a que quelques positions discrètes à déterminer comme pour une application de boite de vitesse où seule la connaissance des 6 ou 7 vitesses sur un intervalle donné est nécessaire et où les positions intermédiaires n'ont pas besoin d'être connues.

Selon un troisième mode de réalisation préféré, l'aimant présentera une aimantation dont la direction est constante et pour laquelle le vecteur d'aimantation $\vec{M}$ en n'importe quel point de l'élément aimanté est colinéaire à $\vec{n}$ ou $\vec{i}$ ou $\vec{j}$, autrement dit l'aimantation est suivant l'épaisseur, la longueur ou la largeur de l'élément aimanté. Par contre, l'élément aimanté présentera une épaisseur qui varie de manière quasi sinusoïdale suivant ses 2 directions X et Y. Cette variation d'épaisseur quasi sinusoïdale sur une demi-période combinée avec une aimantation uniforme engendre un champ magnétique au dessus de l'aimant dont les composantes sont sensiblement sinusoïdales et s'expriment de manière similaire au cas du 1$^{er}$ mode de réalisation décrit ci-dessus. Selon ce 3$^{eme}$ mode de réalisation préféré, le champ magnétique engendré par cet élément aimanté ne tournera que d'environ 180 degrés suivant les directions X et Y ce qui nous donne par exemple λx=2Lx et λy =2Ly. Le traitement des composantes sera identique au 1$^{er}$ mode de réalisation pour déterminer x et y.

Selon un quatrième mode de réalisation, l'élément aimanté présentera une aimantation dont la direction d'aimantation est constante et pour laquelle le vecteur d'aimantation $\vec{M}$ en n'importe quel point de l'aimant est colinéaire à $\vec{n}$, $\vec{i}$ ou $\vec{j}$, autrement dit l'aimantation est suivant l'épaisseur, la longueur ou la largeur de l'élément aimanté. Par contre, l'élément aimanté présentera une épaisseur qui varie de manière quasi sinusoïdale suivant un seul de ses 2 directions X ou Y. Ce 4ème mode de réalisation nécessite un aimant de faible largeur (<30mm ou équivalent en angle) pour qu'au voisinage de cet élément aimanté, cette aimantation engendre un champ magnétique dont les composantes tangentielle (Bx), normale (Bn) et transversale (By) par rapport à l'aimant, soient sensiblement sinusoïdales, sur une grande partie de la course et soient de la même forme que les composantes du 1$^{er}$ mode de réalisation. Un élément aimanté peu large nous permet grâce aux effets de bords d'obtenir un champ magnétique en M qui varie suivant la direction Y sans pour autant que l'élément aimanté ait besoin que son épaisseur varie suivant la direction Y.

De la même manière que pour le 3$^{ème}$ mode de réalisation préféré, le champ magnétique engendré par cet élément aimante ne tourne que d'environ 180 degrés suivant les directions X et Y ce qui nous donne par exemple λx=2Lx et λy =2Ly. Le traitement des composantes est identique au 1$^{er}$ mode de réalisation pour déterminer les positions x et y.

Selon un cinquième mode de réalisation, l'élément aimanté présentera une aimantation dont la direction varie de manière sensiblement linéaire suivant uniquement 1 de ses 2 directions et par rapport a son épaisseur ET sa longueur. Cela signifie qu'en tout point A de l'élément aimanté l'angle entre le vecteur de magnétisation $\vec{M}$ et le vecteur normal $\vec{n}$ soit $(\vec{M}, \vec{n})$ et l'angle entre le vecteur de magnétisation $\vec{M}$ et le vecteur $\vec{i}$ soit $(\vec{M}, \vec{i})$ varient linéairement suivant la direction X mais que l'angle entre le vecteur de Magnétisation $\vec{M}$ et le vecteur $\vec{j}$ est constant suivant la direction Y.

De plus, et contrairement au 2$^{ème}$ mode de réalisation, l'élément aimanté présente une variation de son épaisseur suivant un seul de ses 2 directions (Y) et varie suivant une fonction discontinue en forme d'escalier.

Dans ce cas nous pouvons utiliser uniquement les composantes Bx Et Bz du champ magnétique et faire le post-traitement suivant :

$$\text{Atan}(ky\ ^{Bz}/_{By})\ \text{et}\ \|Bx\vec{i} + Bz\vec{j}\| = \sqrt{Bx^2 + Bz^2}$$

Le calcul de l'angle nous donne une information très précise de la position linéaire suivant X et le module nous donne une information de position grossière suivant la direction Y étant donné que nous avons un aimant en forme d'escalier.

Cette solution peut cependant être très utile quand nous avons une sonde avec uniquement 2 composantes mesurables comme la MLX90316 ou autres et permet de discrétiser des positions suivants Y. Le nombre d'escalier que présente l'aimant suivant Y correspond typiquement au nombre de positions que nous pouvons discrétiser. Ce mode de réalisation peut être utilisé pour discriminer des vitesses dans une application boite de vitesse par exemple.

Selon un sixième mode de réalisation, l'élément aimanté présente une aimantation dont la direction est constante préférentiellement suivant son épaisseur, sans que cela soit exclusif. Ceci signifie que le vecteur d'aimantation $\vec{M}$ en n'importe quel point de l'aimant est colinéaire à $\vec{n}$.

Par contre, l'amplitude du vecteur d'aimantation varie linéairement suivant 1 ou 2 de ses 2 directions. Cela signifie qu'en tout point A de l'élément aimanté, le vecteur de magnétisation $\vec{M}$ est orienté suivant l'épaisseur de l'aimant mais que l'amplitude de ce vecteur varie sinusoïdalement suivant 1 ou 2 des directions X et Y.

Nous aurons donc :

$$\vec{M} = A(x,y)\vec{n}$$

*avec A(x,y) = $A_1$sin (x) + $A_2$sin(y) + constante,* A1 et A2 étant des constantes qui dépendent de l'élément aimanté.

Selon un septième mode de réalisation qui s'applique aux cas où au moins 1 direction est une rotation (on le notera Y), la présente invention est constituée d'un élément aimanté en forme de tuile. Selon ce mode de réalisation, l'élément aimanté présentera une aimantation diamétrale où la direction d'aimantation varie de manière sensiblement linéaire suivant sa direction de rotation Y et par rapport uniquement à son épaisseur.

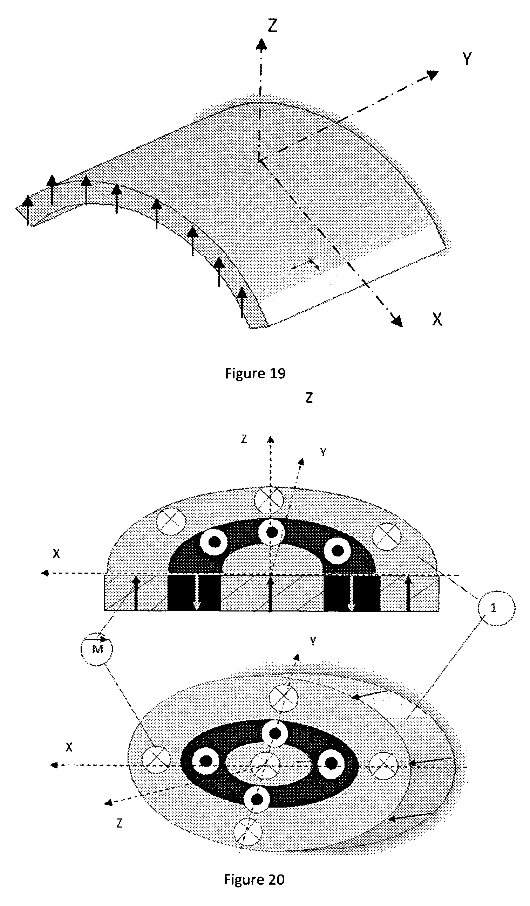

Cela signifie qu'en tout point A de l'élément aimanté l'angle entre le vecteur de magnétisation $\vec{M}$ et le vecteur normal $\vec{n}$ soit $(\vec{M}, \vec{n})$ varie linéairement suivant la direction de rotation Y et que l'angle entre le vecteur de magnétisation $\vec{M}$ et

le vecteur $\vec{i}$ soit $(\vec{M},\vec{i})$ est constant suivant la direction X, X étant une direction de translation. De plus, une aimantation diamétrale signifie que les vecteurs de magnétisation $\vec{M}$ en chaque point A de l'élément aimanté $\vec{M}$ sont colinéaires comme le montre la figure 19.

Ce mode de réalisation nécessite un élément aimanté de faible longueur (<30mm ou équivalent en angle) pour qu'au voisinage de cet élément aimanté, cette aimantation engendre un champ magnétique dont les composantes tangentielle (Bx), normale (Bn) et transversale (By) par rapport à l'aimant, soient sensiblement sinusoïdales sur une grande partie de la course et soient de même forme que les composantes du 1er mode de réalisation. Un élément aimanté peu long nous permet grâce aux effets de bords d'obtenir un champ magnétique en M qui varie suivant la direction X sans pour autant que l'élément aimante ait une aimantation variable suivant cette direction.

Selon ce mode de réalisation préféré, l'aimantation peut être normale, tangentielle ou autres au centre de l'aimant en O', et donc dans ce cas nous avons $\phi$ =[0;2$\pi$], l'aimantation tournant environ autant que l'angle de la tuile d'aimant. C'est-à-dire que si nous avons une tuile de 90 degrés, les composantes du champ magnétique engendrées par cette tuile tournent d'environ 90 degrés.

Selon un huitième mode de réalisation, l'élément aimanté présente une longueur et une profondeur sensiblement voisines des courses utiles ainsi qu'une aimantation dont la direction varie de manière discontinue suivant les 2 directions.

En tout point A de l'élément aimanté, l'angle entre le vecteur de magnétisation $\vec{M}$ et le vecteur normal $\vec{n}$ soit $(\vec{M},\vec{n})$ alterne entre 0 degré et 180 degrés suivant la direction X ou suivant les 2 directions X et Y comme sur la figure 20.

Au voisinage de cet élément aimanté, cette aimantation engendre un champ magnétique $\vec{B}$ $(\vec{B}=Bx\vec{i}$ $+By\vec{j}$ $+ Bz\vec{n})$ dont les composantes tangentielle (Bx), normale (Bn) et transversale (By) par rapport à l'aimant, sont sensiblement sinusoïdales, sur une grande partie de la course suivant les directions X et Y, et en appliquant le même post-traitement des composantes que selon le 1er mode de réalisation nous pouvons en déduire la position de l'élément aimanté par rapport aux éléments magneto-sensibles suivant les 2 directions X et Y.

Bien entendu ces modes de réalisation sont non-exhaustifs et d'autres configurations d'aimantation ou géométrie d'aimant sont possibles.

## BREVE DESCRIPTION DES FIGURES

**L'invention** sera mieux comprise à la lecture de la description qui suit en faisant référence aux figures suivantes :

- la figure 1 représente une solution de l'art antérieur.

- les figures 2a, 2b, et 2C montrent les différentes formes géométriques de l'élément aimanté et les repères associés.

- la figure 3 représente un mode de réalisation où le capteur est composé d'un élément aimanté parallélépipédique et d'une sonde.

- la figure 4 représente la composante Bx du champ magnétique obtenue avec une aimantation selon un des modes de réalisation décrit par cette présente invention.

- la figure 5 représente la composante Bz du champ magnétique obtenue avec une aimantation selon un des modes de réalisation décrit par cette présente invention.

- la figure 6 représente la composante By du champ magnétique obtenue avec une aimantation selon un des modes de réalisation décrit par cette présente invention.

- la figure 7 représente l'évolution suivant l'axe X de la composante By du champ magnétique et ce pour plusieurs positions y.

- La figure 8 représente le traitement du champ magnétique pour en déduire les 2 positions suivant les 2 directions.

- les figures 9a, 9b, 9c, représentent différents algorithmes de post traitement des composantes Bx, By, Bz pour déterminer la position x et y du mobile suivant X et Y.

- La figure 10 représente un signal de sortie selon un mode de réalisation de la présente invention qui permet de déterminer la position suivant la direction X indépendamment de la position suivant Y.

- La figure 11 représente un signal de sortie selon un mode de réalisation de la présente invention qui permet de déterminer la position suivant Y indépendamment de la position suivant X

- la figure 12 est une vue de dessus d'un élément aimanté rectiligne d'épaisseur constante et qui présente une aimantation sinusoïdale suivant plusieurs directions selon un mode de réalisation de la présente invention.

- la figure 13 est une vue en perspective d'un élément aimanté tuile d'épaisseur constante et qui présente une aimantation sinusoïdale suivant plusieurs directions où X est une rotation et Y une translation.

- La figure 14 représente un élément aimanté rectiligne de faible largeur et d'épaisseur constante et une aimantation sinusoïdale continue suivant la direction X selon un mode de réalisation de la présente invention.

- la figure 15 représente un élément aimanté circulaire d'épaisseur variable de manière quasi sinusoïdale suivant plusieurs directions et aimanté sensiblement suivant l'épaisseur.

- La figure 16 représente un élément aimanté rectiligne à épaisseur variable de manière quasi sinusoïdale suivant sa direction X et aimanté sensiblement suivant son épaisseur.

- la figure 17 représente un aimant dont l'épaisseur varie discontinuent suivant la direction Y et qui présente une aimantation sinusoïdale suivant la direction X.

- la figure 18 est une vue de coté et de dessus d'un élément aimanté dont l'épaisseur est constante et qui présente une aimantation suivant son épaisseur mais dont l'amplitude est sinusoïdale suivant la direction X.

- La figure 19 est une vue en perspective d'un élément aimanté tuile d'épaisseur constante et une aimantation diamétrale où la direction X est une rotation et la direction Y est une translation.

- la figure 20 est une vue en coupe et en perspective d'un élément aimanté elliptique d'épaisseur constante qui présente une alternance d'aimantations Nord - Sud suivant les directions X et Y.

- La figure 21 représente un élément aimanté rectiligne de faible largeur et d'épaisseur constante et une aimantation sinusoïdale continue suivant la direction X et une pièce ferromagnétique liée à l'élément aimanté qui permet de diminuer les effets de bord.

## DESCRIPTION DETAILLEE DES MODES DE REALISATION

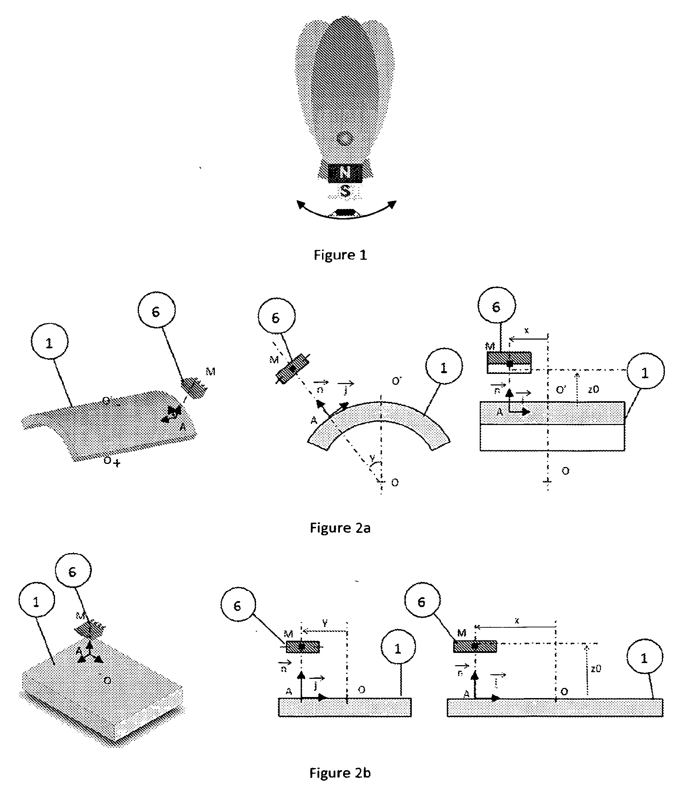

La figure 1 représente une solution de l'art antérieur qui permet de mesurer 2 angles de rotation. Dans ce cas, les 3 composantes du champ magnétique sont utilisées pour déterminer les 2 angles de rotation. L'aimant utilisé est un cylindre d'épaisseur constante et aimanté suivant uniquement son épaisseur. Cette configuration très spécifique est uniquement destinée à la mesure de deux angles et pour de très faibles courses car cette aimantation constante suivant l'épaisseur n'est pas appropriée pour la mesure d'angle supérieur à une trentaine de degrés.

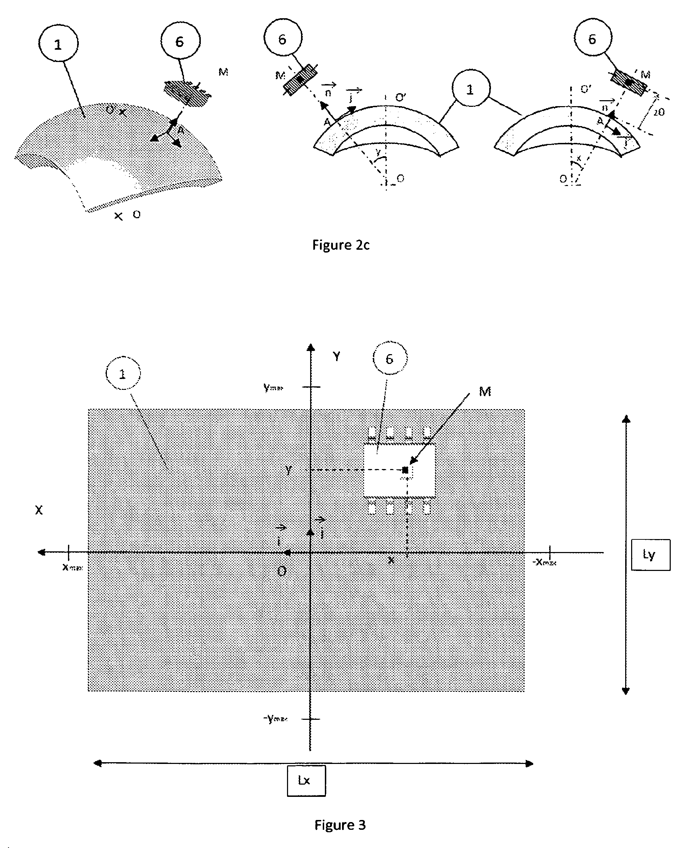

Les figures 2a, 2b, 2c sont des vues en perspective, de face et de coté d'éléments aimantés (1) et de sondes (6) utilisés dans nos modes de réalisation pour déterminer la position (x,y) de l'élément aimanté (1) par rapport à la sonde (6) respectivement suivant une rotation et une translation (Fig 2a), 2 translations (Fig 2b) et 2 rotations (Fig 2c).

Quel que soit le mode de réalisation de l'invention, la sonde 6 se déplace par rapport à l'élément aimanté 1 en restant dans une surface de déplacement et sans subir de rotation autour de l'axe normal à cette surface de déplacement.

De plus, dans les modes de réalisation des figures 2a, 2b, 2c, 3 à 6, 10 à 14, et 18 à 21, la distance séparant la surface de déplacement de la sonde de la surface supérieure de l'élément aimanté 1 est constante.

En conséquence, la surface de déplacement de la sonde 6 est constituée par une portion de cylindre coaxiale à la surface supérieure cylindrique de l'élément aimanté 1 dans les modes de réalisation des figures 2a, 13, et 19, par une portion de plan parallèle à la surface supérieure plane de l'élément aimanté 1 dans les modes de réalisation des figures 2b, 3 à 6, 10 à 12, 14, 18, et 20 à 21, et par une portion de sphère concentrique à la surface supérieure sphérique de l'élément aimanté 1 dans le mode de réalisation de la figure 2c.

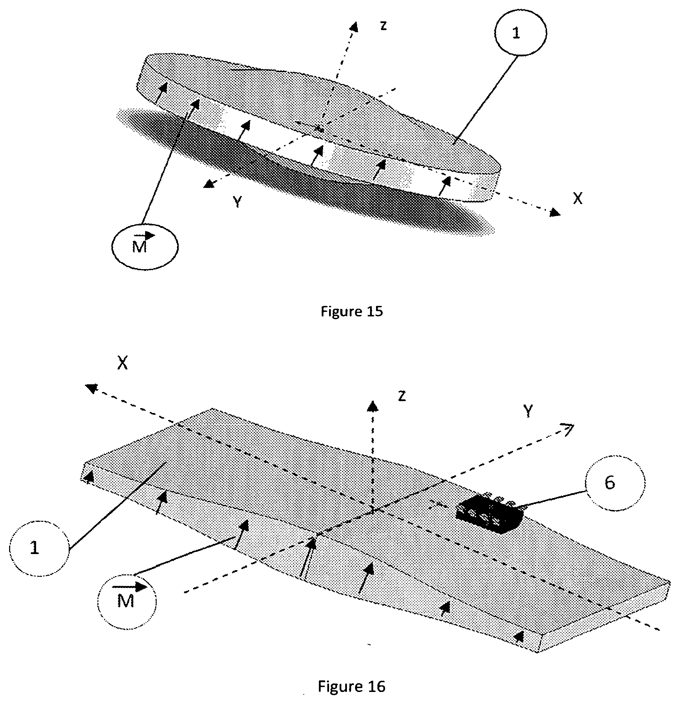

En revanche, dans les modes de réalisation des figures 15 et 16, dans lesquels la sonde 6 se déplace dans une surface de déplacement constituée par un plan parallèle à un plan médian de l'élément aimanté 1, la distance entre la sonde 6 et la surface supérieure non plane de l'élément aimanté 1 évolue, à une constante positive près, comme une fonction sinusoïdale de la position relative de la sonde 6 et de l'élément aimanté 1 suivant chacune des directions X et Y pour le mode de réalisation de la figure 15, et suivant la direction X pour le mode de réalisation de la figure 16.

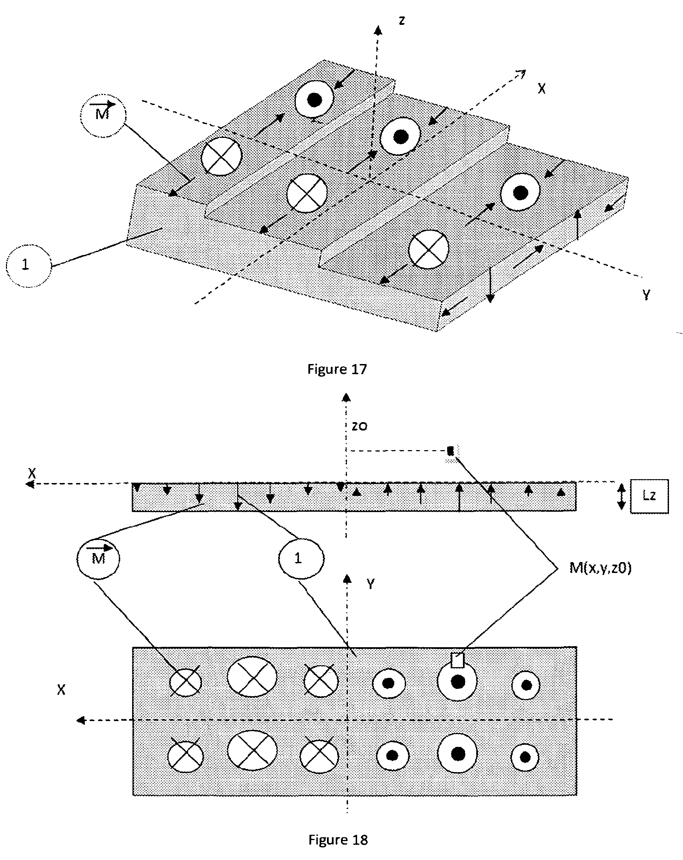

De même, dans le mode de réalisation de la figure 17, dans lequel la sonde se déplace dans une surface de déplacement constituée par un plan parallèle à un plan fixe de l'élément aimanté 1, la distance entre la sonde 6 et la surface supérieure non plane de l'élément aimanté 1 évolue, à une constante positive près, comme une fonction pseudo-sinusoïdale de la position relative de la sonde 6 et de l'élément aimanté 1 suivant la direction Y.

O est le centre de rotation dans le cas où une direction est une rotation, O' est le milieu de la surface extérieure de

l'élément aimanté, $\overrightarrow{O'O}$ est nul dans le cas où les 2 directions sont des translations mais $(\vec{M}, \vec{i})$ dans les autres cas avec Rext étant le rayon extérieur de l'élément aimanté. M est le point où sont regroupés les éléments magneto-sensibles dans la sonde (6) et A est la projection de M suivant le vecteur normal $\vec{n}$ sur la surface extérieure de l'élément aimanté (1). $O(\vec{i}, \vec{j}, \vec{n})$ est le repère utilisé pour définir la position des différents points O', A et M. Dans les cas des figures 2a, 2b et 2c le repère est respectivement un repère cylindrique, cartésien et sphérique ou $\vec{n}$ est le vecteur normal en un point d'une surface et $\vec{i}, \vec{j}$ les vecteurs tangentiels à cette surface en ce même point. Le vecteur $\overrightarrow{AM}$ est donc colinéaire au vecteur $\vec{n}$ en A et sa norme correspond à l'entrefer z0 de mesure qui est une constante du capteur. Les figures 2a, 2b et 2c nous indiquent que $\overrightarrow{OM} = R_{ext}\vec{n} + x\vec{i} + y\vec{j} + z_0\vec{n}$. La présente invention a donc pour but de déterminer le couple (x,y) pour ainsi déterminer la position de l'élément aimanté (1) par rapport aux éléments magneto-sensible (2) et (3) de la sonde (6) suivant les 2 directions orientées par les vecteurs $\vec{i}, \vec{j}$.

Sur ces figures 2a, 2b, 2c, on définit pour chaque configuration, les dimensions de l'élément aimanté (1) relativement aux repères $\vec{i}, \vec{j}, \vec{n}$. Pour le cas de la figure 2a, il s'agit respectivement de la longueur rectiligne, la longueur angulaire et l'épaisseur. Pour le cas de la figure 2b, il s'agit respectivement de la longueur, la largeur et l'épaisseur. Pour le cas de la figure 2c, il s'agit respectivement de la première longueur angulaire, la deuxième longueur angulaire et l'épaisseur.

La figure 3 représente une vue de dessus d'un mode de réalisation où le capteur est composé d'un élément aimanté (1) parallélépipédique de longueur Lx et de largeur Ly, de centre O(0,0,0), et d'une sonde (6) capable de mesurer en M(x,y,z0) les 3 composantes du champ magnétique (Bx,By,Bz) générées par l'élément aimanté (1) pour en déduire la position (x,y) suivant les directions X et Y de l'élément (1) par rapport a la sonde (6). La course de l'élément aimanté (1) selon X est de (2xmax) et selon Y est de (2ymax) avec 2xmax et 2ymax sensiblement égaux à respectivement Lx et Ly.

La figure 4 représente l'élément aimanté (1), la sonde (6) et la composante (Bx) du champ magnétique en tout point M(x,y,z0) et à un entrefer de mesure z0 donné, obtenue avec une aimantation de l'élément aimanté (1) selon un des modes de réalisation décrit par cette présente invention. Dans ce cas, l'élément aimanté (1) engendre un champ magnétique dont la composante Bx varie sinusoïdalement suivant ses 2 directions X et Y de manière telle que

$$Bx(x,y,z_0) = BxMAX * \cos(\frac{2\pi}{Lx}*x) * \cos(\frac{\pi}{Ly}*y) * \frac{A}{z_0}.$$

La figure 5 représente, selon la même configuration que la figure précédente, la composante (Bz) du champ magnétique en tout point (x,y) et à un entrefer de mesure z0 et qui peut s'écrire :

$$Bz(x,y,z_0) = BzMAX * \sin(\frac{2\pi}{Lx}*x) * \cos(\frac{\pi}{Ly}*y) * \frac{A}{z_0}.$$

La figure 6 représente, selon la même configuration que les deux figures précédentes, la composante (Bz) du champ magnétique en tout point (x,y) et a un entrefer de mesure z0 et qui peut s'écrire :

$$Bz(x,y,z_0) = BzMAX * \sin(\frac{\pi}{\lambda x}*x) * \cos(\frac{\pi}{\lambda y}*y) * \frac{A}{z_0}$$

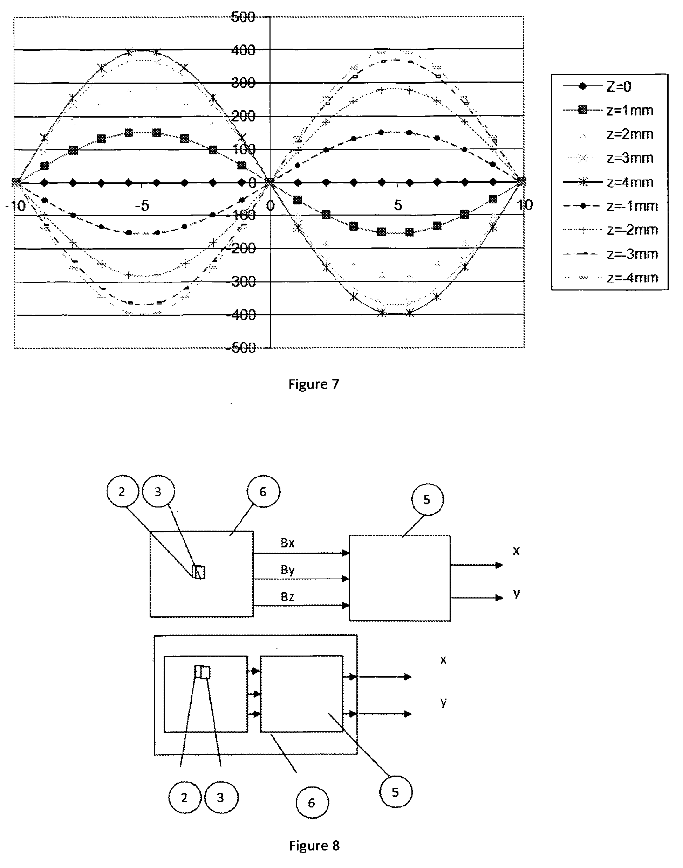

La figure 7 représente l'évolution, suivant la direction X -en mm- de la composante By -en Gauss- du champ magnétique engendrée par l'élément aimanté (1) suivant un mode de réalisation de la présente invention et à un entrefer z0 donné, et ce pour 8 positions suivant Y différentes. Dans ce cas xmax=10, ymax=4, Bymax=400, phi=0, $\lambda 4$=20 et $\lambda 2$=4 et A=z0.

La figure 8 décrit le traitement du champ B généré par l'élément aimanté (1) et mesuré par la sonde (6) qui, à partir d'au moins 2 de ces éléments magneto-sensibles (2) et (3) qui se trouvent au même point, permettent de mesurer les 3 composantes du champ magnétique. Une fois ces 3 composantes obtenues, le circuit de traitement (5) permet à partir de combinaisons algébriques entre les composantes et de calculs d'angle et de module de déterminer la position suivant X et Y de l'élément aimanté par rapport à la sonde. Le circuit de traitement (5) peut être intégré dans la sonde (6) ou alors se faire a l'extérieur via un microcontrôleur ou une ECU.

Les figures 9a, 9b, 9c représentent différents algorithmes de post traitement des composantes Bx, By, Bz pour déterminer la position de l'élément aimanté par rapport à la sonde (6) suivant X et Y, selon le type d'élément aimanté et d'aimantation choisis. La figure 9a montre comment utiliser les 3 composantes du champ magnétique en calculant Atan (K1Bx/Bz) et Atan (K2By/Bz) pour déterminer la position x et y. La figure 9b montre comment utiliser seulement 2 composantes du champ magnétique en calculant Atan (K1Bx/Bz) et le module (racine(Bx^2+Bz^2)) pour déterminer la position x et y. La figure 9c montre comment utiliser les 3 composantes du champ magnétique en calculant Atan(racine((K1Bz)^2+(K2By)^2)/Bx)et Atan(racine((K1Bz)^2+(K2Bx)^2)/By) pour déterminer la position x et y.

La figure 10 représente un signal de sortie selon un mode de réalisation de la présente invention qui permet de déterminer la position suivant X indépendamment de la position suivant Y à partir des composantes Bx et Bz du champ magnétique telles que représentées aux figures 4 et 5 et utilisant le traitement défini en 9a. Le signal de sortie est obtenu en calculant l'arctangente de (Kx*Bx/Bz) ce qui donne un signal de sortie linéaire suivant X et indépendant de Y et ce quel que soit l'entrefer de mesure z0 ce qui permet de déterminer la position de l'élément aimante (1) par rapport a la sonde (6) suivant sa direction X.

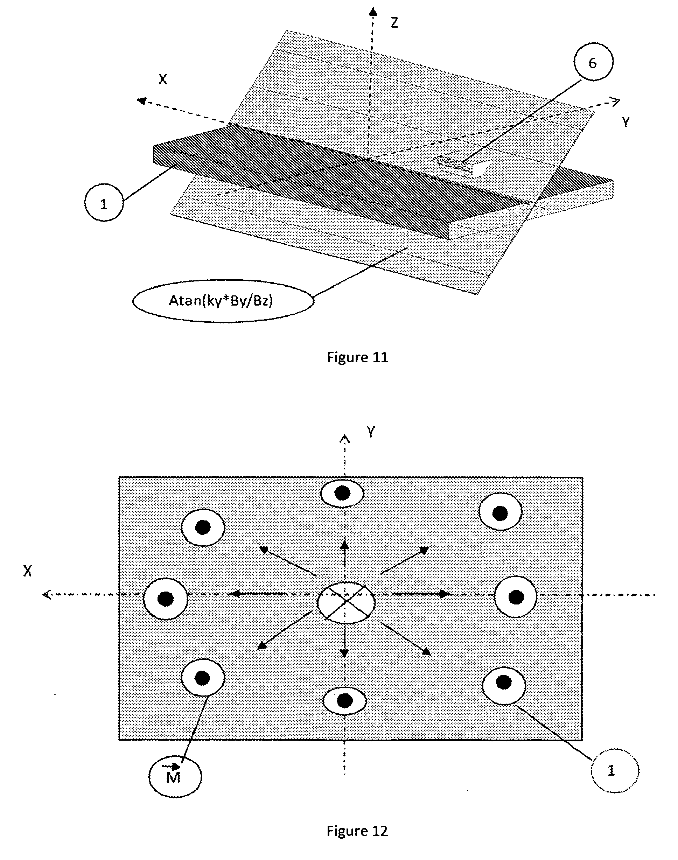

Selon le même principe, la figure 11 représente un signal de sortie qui permet de déterminer la position suivant Y indépendamment de la position suivant X. Le signal se sortie est obtenu en calculant l'arctangente de (Ky*By/Bz) ce qui donne un signal de sortie linéaire suivant Y et indépendant de X et ce quel que soit l'entrefer de mesure z0 ce qui permet de déterminer la position de l'élément aimante (1) par rapport a la sonde (2) suivant sa deuxième direction Y.

La figure 12 représente un élément aimanté (1) rectiligne d'épaisseur constante et d'aimantation, représentée par le vecteur $\vec{M}$, dont la direction varie linéairement suivant plusieurs directions dans des plans définis par combinaison des directions de déplacement X et Y et une normale à ces directions, c'est a dire Z. Sur cette figure et l'ensemble des figures suivantes, une flèche pleine dans l'élément aimanté (1) représente une direction d'aimantation suivant les axes $\vec{i}, \vec{j}$ ou $\vec{n}$ du repère défini en figure 2b, un cercle pointé représente une direction d'aimantation sortante, et un cercle croisé représente une direction d'aimantation entrante. Comme on peut le constater, les lignes de champ ainsi définies à l'intérieur de l'élément aimanté (1) sont non colinéaires, ce qui constitue un des principes de base de ladite invention et qui permet d'engendrer des composantes du champ magnétiques telles que celles des figures 4 ou 5 ou 6 mais avec phi=pi/2 et quelles que soient les dimensions de l'élément aimanté.

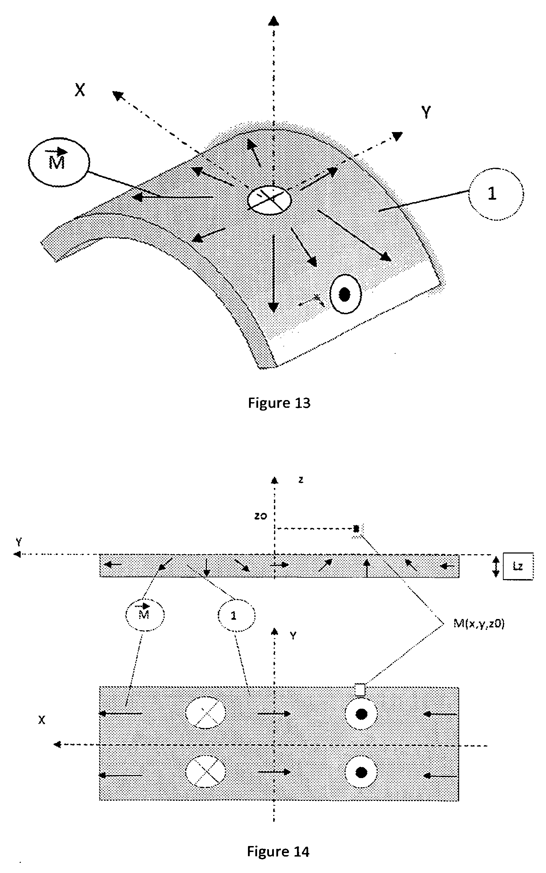

La figure 13 est une vue en perspective d'un aimant tuile (1) d'épaisseur constante et d'aimantation, représentée par le vecteur $\vec{M}$, dont la direction varie linéairement suivant plusieurs directions dans des plans définis par combinaison des directions de déplacement X et Y et une normale à ces directions, c'est a dire Z. Comme on peut le constater, les lignes de champ à l'intérieur de l'aimant sont non colinéaires, ce qui constitue un des principes de base de ladite invention et qui permet d'engendrer des composantes du champ magnétiques telles que celles des figures 4 ou 5 ou 6 mais avec phi=pi/2 et quelles que soient les dimensions de l'élément aimanté. Dans ce cas de figure X est une direction de rotation et Y une direction de translation.

La figure 14 représente un mode de réalisation appliqué à un élément aimanté (1) rectiligne d'épaisseur constante. Selon ce mode particulier, l'élément aimanté (1) a une aimantation, représentée par le vecteur $\vec{M}$, dont la direction varie linéairement suivant la longueur de l'élément aimanté dans un plan défini par la direction de déplacement X et une normale à cette direction Z. Comme on peut le constater, les lignes de champ à l'intérieur de l'élément aimanté sont non colinéaires, ce qui constitue un des principes de base de ladite invention et qui permet d'engendrer des composantes du champ magnétiques telles que celles des figures 4, 5 ou 6 dans le cas ou la largeur de l'élément aimanté Ly serait faible.

La figure 15 représente un aimant circulaire (1) d'épaisseur variable de manière quasi sinusoïdale suivant ses rayons et aimanté sensiblement suivant l'épaisseur (direction z). Ce mode de réalisation, permet, quelles que soient les dimensions de l'aimant, d'engendrer des composantes de champ magnétiques telles que :

- Bx(x,y,z0)= BxMAX * cos(2pi/λp*x +phi) * cos(2pi/λx*y) *A/z0,

- By(x,y,z0)=ByMAX *sin(2pi/ λp *x +phi)* sin(2pi/λ*y)*A/z0,

- Bz(x,y,z0)= BzMAX *sin(2pi/λp *x+ phi)* cos(2pi/λ*y)*A/z0.

où phi=pi/2 et λu=xmax et λe=ymax. Le calcul d'arctangente de KxBx/Bz ou KyBy/Bz réalisé par (5) donne un signal linéaire et donne une information de la position de l'aimant par rapport à la sonde suivant les 2 axes X et Y.

La figure 16 représente un élément aimanté (1) ayant une aimantation dont la direction est sensiblement orientée suivant son épaisseur mais dont l'épaisseur varie quasi sinusoïdalement. Selon ce mode de réalisation, si la largeur Ly de l'élément aimanté (1) est faible, les composantes mesurées du champ magnétiques sont telles que

- Bx(x,y,z0)= BxMAX * cos(2pi/λp*x +phi) * cos(2pi/λx*y) *A/z0,

- By(x,y,z0)= ByMAX *sin(2pi/ λp *x +phi)* sin(2pi/λ*y)*A/z0,

- Bz(x,y,z0)= BzMAX *sin(2pi/λp *x+ phi)* cos(2pi/λ*y)*A/z0.

où phi=pi/2 et λh=xmax et λe=ymax. Le calcul d'arctangente de KxBx/Bz ou KyBy/Bz réalisé par (5) donne un signal linéaire et donne une information de la position de l'aimant (1) par rapport à la sonde (6) suivant les 2 axes X et Y.

La figure 17 représente un aimant (1) dont l'épaisseur varie de manière discontinue suivant Y et qui présente une aimantation sinusoïdale suivant X. A un grand entrefer entre l'élément aimanté et la sonde (6), les composantes du champ magnétique redeviennent continues et nous pouvons calculer l'Arctangente de KxBx/Bz et le module de (Bx + Bz) pour en déduire la position l'élément aimanté (1) par rapport à la sonde (6) suivant ses 2 directions X et Y.

La figure 18 est une vue de coté et de dessus d'un élément aimanté (1) dont l'épaisseur est constante et qui présente une aimantation suivant son épaisseur mais dont l'amplitude est sinusoïdale suivant la direction X. Ce cas de figure est bien adapté à l'utilisation d'aimant anisotrope pour ce qui est de l'élément aimanté (1). Une anisotropie suivant l'épaisseur permet d'avoir des aimants présentant une plus forte induction rémanente. Etant donné que dans ce cas nous n'avons pas de variation d'aimantation suivant la direction Y, ce cas de figure fonctionne dans le cas ou l'aimant anisotrope est peu large en profitant des effets de bords.

La figure 19 est une vue en perspective d'un élément aimanté (1) tuile d'épaisseur constante et une aimantation diamétrale où la direction X est une rotation et la direction Y est une translation. Cette aimantation diamétrale correspond bien à une direction d'aimantation variable par rapport à l'épaisseur et dans ce cas suivant la direction X. Etant donné que dans ce cas nous n'avons pas de variation d'aimantation suivant la direction Y, ce cas de figure fonctionne dans le cas où l'élément aimanté (1) est peu large en jouant sur les effets de bords. On peut également, pour ce cas de figure, utiliser un aimant anisotrope diamétralement.

La figure 20 représente une vue en coupe et en perspective d'un élément aimanté (1) elliptique d'épaisseur constante qui présente une aimantation suivant Z et discontinue avec une alternance d'aimantation de Nord et de Sud suivant l'axe X et Y. Cette aimantation engendre à une certaine distance de l'élément aimanté (1) des composantes Bx, By, Bz du champ magnétique telles que décrites dans les figures 4, 5 et 6.

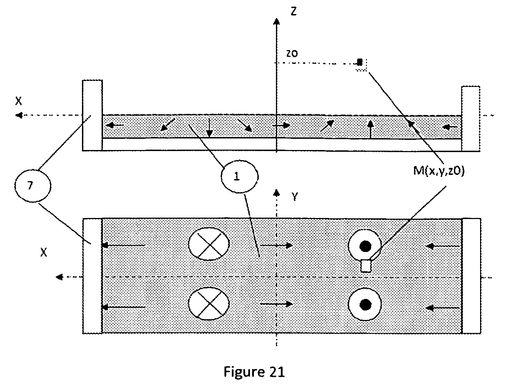

La figure 21 représente un mode de réalisation de l'aimantation appliquée à un élément aimanté (1) rectiligne d'épaisseur constante. Selon ce mode particulier, l'élément aimanté (1) a une aimantation, représentée par le vecteur $\vec{M}$, dont la direction varie linéairement suivant la longueur de l'aimant dans un plan défini par la direction de déplacement X et une normale à cette direction Z. En plus de l'élément aimanté, une pièce ferromagnétique (7) est ajoutée pour augmenter le champ généré par l'élément aimanté (1) et pour diminuer les effets de bords suivant la direction X.

Comme l'aura compris l'homme du métier à la lecture de la présente description, l'invention concerne un capteur magnétique de position permettant de déterminer la position bidimensionnelle d'une sonde 6 mobile par rapport à un élément aimanté 1, y compris dans le cas où le déplacement de la sonde présente une amplitude importante suivant la première au moins des deux directions de déplacement.

Pour ce faire, l'invention peut utiliser un ou plusieurs principes choisis dans un ensemble de trois principes.

Le premier principe, qui peut être appliqué à la détermination de la position de la sonde suivant la première dimension ou chacune des deux dimensions du déplacement bidirectionnel, consiste à doter l'élément aimanté d'une aimantation produisant un champ magnétique au moins approximativement sinusoïdal suivant, respectivement, cette première dimension ou chacune des deux dimensions.

Le deuxième principe, qui peut seulement être appliqué à la détermination de la position de la sonde suivant la deuxième dimension du déplacement bidirectionnel et seulement dans le cas où l'amplitude du déplacement selon cette deuxième dimension est limitée, consiste à estimer la position de la sonde suivant cette dimension en utilisant la mesure d'un champ magnétique approximativement sinusoïdal produit par l'élément aimanté grâce à un effet de bord.

Le troisième principe, qui peut être appliqué à la détermination de la position de la sonde suivant la première dimension ou chacune des deux dimensions du déplacement bidirectionnel, consiste à estimer la position de la sonde suivant cette première dimension ou chacune d'elles en utilisant la mesure d'un champ magnétique d'intensité variable produit par l'élément aimanté ayant une direction d'aimantation constante selon la première dimension ou chacune des deux dimensions du déplacement bidirectionnel.

Ce troisième principe peut lui-même être mis en oeuvre selon deux modalités différentes.

La première modalité, par exemple décrite en référence aux figures 15 à 17, consiste à donner à la surface supérieure de l'élément aimanté une forme sinusoïdale ou pseudo-sinusoïdale suivant la première dimension du déplacement ou chacune d'elles, de manière que la distance entre la sonde 6 et la surface supérieure de l'élément aimanté 1 varie en fonction de la position de la sonde suivant, respectivement, la première dimension ou chacune d'elles.

La deuxième modalité, par exemple décrite en référence à la figure 18, consiste à doter l'élément aimanté d'une aimantation qui varie en intensité suivant l'une des deux dimensions du déplacement.

## Revendications

1. - Capteur magnétique de position comportant un élément aimanté (1) et une sonde (6) comportant au moins deux éléments magnéto-sensibles (2) et (3) localisés sensiblement au même point et mesurant chacun une des composantes du champ magnétique généré par ledit élément aimanté (1), l'élément aimanté (1) étant mobile relativement aux dits éléments magnéto-sensibles (2) et (3),
**caractérisé en ce que** ledit élément aimanté (1) est unique et présente deux degrés de liberté (translation/translation, translation/rotation ou rotation/rotation) par rapport à ladite sonde (6), le vecteur aimantation de l'élément aimanté (1) est variable par rapport au vecteur normal à la surface de l'élément aimanté disposée en regard de la sonde (6) selon au moins deux directions dudit élément aimanté de sorte à définir une position unique de ladite sonde (6) vis-à-vis dudit élément aimanté (1) suivant lesdites deux directions et **en ce qu'**il comporte au moins un circuit de traitement (5) apte à effectuer des calculs d'angles et de modules à partir de combinaisons algébriques des composantes du champ magnétique produit par ledit élément aimanté (1) et fournissant au moins deux signaux indépendants représentatifs de la position de l'élément mobile selon deux directions distinctes.

2.  - Capteur magnétique de position selon la revendication 1 **caractérisé en ce que** la direction du vecteur aimantation de l'élément aimanté est variable selon au moins une des dimensions de l'élément aimanté.

3.  - Capteur magnétique position selon la revendication 2 **caractérisé en ce que** la direction du vecteur aimantation présente plusieurs périodes sur la course mesurée.

4.  - Capteur magnétique de position selon l'une au moins des revendications précédentes **caractérisé en ce que** une des dimensions de l'élément aimanté est variable selon au moins une des deux directions induisant une variation de la direction du vecteur normal.

5.  - Capteur magnétique de position selon la revendication 4 **caractérisé en ce que** la dimension varie selon une fonction discontinue.

6.  - Capteur magnétique de position selon la revendication 4 **caractérisé en ce que** la dimension de l'élément aimanté varie sensiblement suivant une fonction sinusoïdale.

7.  - Capteur magnétique de position selon l'une des revendications précédentes **caractérisé en ce que** l'amplitude du vecteur aimantation de l'élément aimanté est variable selon au moins une des deux directions.

8.  - Capteur magnétique de position selon la revendication 1 **caractérisé en ce que** la direction du vecteur aimantation est constante et son amplitude varie de façon sinusoïdale suivant au moins une des deux directions.

9.  - Capteur magnétique de position selon la revendication 1 **caractérisé en ce que** le vecteur aimantation de l'élément aimanté présente au moins une alternance de sens suivant au moins une des deux directions.

10. - Capteur magnétique de position selon l'une au moins des revendications précédentes **caractérisé en ce que** ledit circuit de traitement du signal réalise au moins 2 calculs d'arc tangente.

11. - Capteur magnétique de position selon l'une au moins des revendications précédentes **caractérisé en ce que** ledit circuit de traitement du signal réalise au moins un calcul d'arc tangente et un calcul de module.

12. - Capteur magnétique de position selon l'une au moins des revendications précédentes **caractérisé en ce que** le calcul de la position suivant au moins une direction est réalisé par un calcul d'arc tangente du rapport de deux composantes du champ magnétique après avoir appliqué un coefficient correcteur entre ces deux composantes.

13. - Capteur magnétique de position selon l'une au moins des revendications précédentes **caractérisé en ce que** le circuit du traitement est intégré avec les éléments magnéto-sensibles dans un seul composant.

14. - Capteur magnétique de position selon l'une au moins des revendications précédentes **caractérisé en ce que** l'élément aimanté est constitué d'un aimant permanent et d'au moins une pièce ferromagnétique.

15. - Capteur magnétique de position selon l'une au moins des revendications précédentes **caractérisé en ce que** les composantes du champ magnétique mesurées varient de façon sensiblement sinusoïdale suivant chacune des au moins deux directions.

**Patentansprüche**

1. Magnetischer Positionssensor mit einem magnetisierten Element (1) und einer Sonde (6), welche mindestens zwei magnetempfindliche Elemente (2) und (3) umfasst, die sich im Wesentlichen an der gleichen Stelle befinden und jeweils eine der Komponenten des Magnetfelds, das durch besagtes magnetisiertes Element (1) generiert wird, misst, wobei das magnetisierte Element in Bezug auf die besagten magnetempfindlichen Elemente (2) und (3) beweglich ist, **dadurch gekennzeichnet, dass** besagtes magnetisiertes (Element) einzig ist und im Verhältnis zu besagter Sonde (6) zwei Freiheitsgrade aufweist (Translation/Translation, (Translation/Rotation oder Rotation/Rotation), wobei der Magnetisierungsvektor des magnetisierten Elements (1) in Bezug auf den normalen Vektor an der Oberfläche des magnetisierten Elements, das gegenüber der Sonde (6) in mindestens zwei Richtungen besagten magnetisierten Elements positioniert ist, veränderlich ist, so dass für die Sonde (6) gegenüber des besagten magnetischen Elements (1) eine einzige Position in besagte zwei Richtungen definiert wird, und dadurch, dass es mindestes eine Verarbeitungsschaltung (5) umfasst, die in der Lage ist, Winkel- und Modulberechnungen ausgehend von algebraischen Kombinationen der Komponenten des Magnetfelds, das durch besagtes magnetisiertes Element (1) erzeugt wird, anzustellen, und mindestens zwei unabhängige Signale liefert, die für die Position des beweglichen Elements in einer der beiden Richtungen repräsentativ ist.

2. Magnetischer Positionssensor nach Anspruch 1, **dadurch gekennzeichnet, dass** die Richtung des Magnetisierungsvektors des magnetisierten Elements in Abhängigkeit von mindestens einer der Abmessungen des magnetisierten Elements veränderlich ist.

3. Magnetischer Positionssensor nach Anspruch 2, **dadurch gekennzeichnet, dass** die Richtung des Magnetisierungsvektors mehrere Perioden im gemessenen Weg aufweist.

4. Magnetischer Positionssensor nach mindestens einem der vorhergehenden Ansprüche, **dadurch gekennzeichnet, dass** eine der Abmessungen des magnetisierten Elements in mindestens eine der beiden Richtungen, die zu einer Veränderung der Richtung des normalen Vektors führen, veränderlich ist.

5. Magnetischer Positionssensor nach Anspruch 4, **dadurch gekennzeichnet, dass** sich die Abmessung gemäß einer diskontinuierlichen Funktion verändert.

6. Magnetischer Positionssensor nach Anspruch 4, **dadurch gekennzeichnet, dass** sich die Abmessung des magnetisierten Elements im Wesentlichen in Abhängigkeit von der Sinusfunktion verändert.

7. Magnetischer Positionssensor nach einem der vorhergehenden Ansprüche, **dadurch gekennzeichnet, dass** die Amplitude des Magnetisierungsvektors des magnetisierten Elements in mindestens eine der beiden Richtung veränderlich ist.

8. Magnetischer Positionssensor nach Anspruch 1, **dadurch gekennzeichnet, dass** die Richtung des Magnetisierungsvektors konstant ist und sich seine Amplitude sinusförmig in Abhängigkeit von mindestes einer der beiden Richtung verändert.

9. Magnetsicher Positionssensor nach Anspruch 1, **dadurch gekennzeichnet, dass** der Magnetisierungsvektor des magnetisierten Elements in mindestens eine der beiden Richtungen einen Richtungswechsel vornimmt.

10. Magnetischer Positionssensor nach mindestens einem der vorhergehenden Ansprüche, **dadurch gekennzeichnet, dass** besagte Schaltung zur Verarbeitung des Signals mindestens 2 Arcustangensberechnungen anstellt.

11. Magnetischer Positionssensor nach mindestens einem der vorhergehenden Ansprüche, **dadurch gekennzeichnet, dass** besagte Signalverarbeitungsschaltung mindestens eine Arcustangensberechnung und eine Modulberechnung anstellt.

12. Magnetischer Positionssensor nach mindestens einem der vorhergehenden Ansprüche, **dadurch gekennzeichnet, dass** die Berechung der Position in mindestens einer Richtung durch eine Arcustangensberechnung des Verhältnisses von zwei Komponenten des Magnetfelds erfolgt, nachdem ein Berichtigungskoeffizient auf diese beiden Komponenten angewandt wurde.

**13.** Magnetischer Positionssensor nach mindestens einem der vorhergehenden Ansprüche, **dadurch gekennzeichnet, dass** die Verarbeitungsschaltung mit den magnetempfindlichen Elementen in ein einziges Bauteil eingebaut wird.

**14.** Magnetischer Positionssensor nach mindestens einem der vorhergehenden Ansprüche, **dadurch gekennzeichnet, dass** das magnetisierte Element aus einem Dauermagneten und mindestens einem ferromagnetischen Teil besteht.

**15.** Magnetischer Positionssensor nach mindestes einem der vorhergehenden Ansprüche, **dadurch gekennzeichnet, dass** sich die Komponenten des gemessenen Magnetfelds sinusförmig in mindestens eine der beiden Richtungen verändern.

**Claims**

**1.** A magnetic position sensor comprising one magnetized element (1) and a probe (6) comprising at least two magneto-sensitive elements (2) and (3) located substantially at the same point and each measuring one of the components of the magnetic field generated by said magnetized element (1), with the magnetized element (1) being movable relative to said magneto-sensitive elements (2) and (3),
**characterized in that** said magnetized element (1) is unique and has two degrees of freedom (translation/translation, translation/rotation or rotation/rotation) relative to said probe (6), the magnetization vector of the magnetized element (1) is variable relative to the vector normal to the surface of the magnetized element arranged facing the sensor (6) in at least two directions of said magnetized element (1) so as to define a unique position of said probe (6) relative to said magnetized element (1) in said two directions and **in that** it comprises at least one processing circuit (5) adapted to perform angles and modules calculations from algebraic combinations of the components of the magnetic field produced by said magnetized element (1) and providing at least two independent signals representative of the position of the movable member in two different directions.

**2.** A magnetic position sensor according to claim 1, **characterized in that** the direction of the magnetization vector of the magnetized element is variable according to at least one of the dimensions of the magnetized element.

**3.** A magnetic position sensor according to claim 2, **characterized in that** the direction of the magnetization vector has several periods on the measured travel.

**4.** A magnetic position sensor according to at least one of the preceding claims, **characterized in that** one of the dimensions of the magnetized element is variable in at least one of the two directions inducing a variation in the direction of the normal vector.

**5.** A magnetic position sensor according to claim 4, **characterized in that** the dimension varies according to a discontinuous function.

**6.** A magnetic position sensor according to claim 4, **characterized in that** the dimension of the magnetized element substantially varies according to a sinusoidal function.

**7.** A magnetic position sensor according to one of the preceding claims, **characterized in that** the amplitude of the magnetization vector of the magnetized element is variable in at least one of the two directions.

**8.** A magnetic position sensor according to claim 1, **characterized in that** the direction of the magnetization vector is constant and the amplitude thereof varies sinusoidally in at least one of the two directions.

**9.** A magnetic position sensor according to claim 1, **characterized in that** the magnetization vector of the magnetized element has at least alternating ways in at least one of the two directions.

**10.** A magnetic position sensor according to at least one of the preceding claims, **characterized in that** said signal processing circuit performs at least 2 arc tangent calculations.

**11.** A magnetic position sensor according to at least one of the preceding claims, **characterized in that** said signal processing circuit performs at least one arc tangent calculation and one module calculation.

**12.** A magnetic position sensor according to at least one of the preceding claims, **characterized in that** the calculation of the position in at least one direction is performed by an arc tangent calculation of the ratio of two components of the magnetic field after applying a correcting coefficient between these two components.

13. A magnetic position sensor according to at least one of the preceding claims, **characterized in that** the processing circuit is integrated with the magneto-sensitive elements in a single component.

14. A magnetic position sensor according to at least one of the preceding claims **characterized in that** the magnetized element consists of a permanent magnet and at least one ferromagnetic part.

15. A magnetic position sensor according to at least one of the preceding claims, **characterized in that** the measured components of the magnetic field substantially vary sinusoidally in each one of at least the two directions.

Figure 1

Figure 2a

Figure 2b

Figure 2c

Figure 3

Figure 4

Figure 5

Figure 6

Figure 7

Figure 8

Bx (x,y.z0)     Bz (x,y.z0)     By (x,y.z0)

ATAN            ATAN

x               y

**Figure 9a**

Bx (x,y.z0)     Bz (x,y.z0)

ATAN            Module

x               y

**Figure 9b**

Bx (x,y.z0)     Bz (x,y.z0)     By (x,y.z0)

ATAN            ATAN

x               y

**Figure 9C**

Z

X

6

Y

1

Atan(kx*Bx/Bz)

**Figure 10**

Figure 11

Figure 12

Figure 13

Figure 14

Figure 15

Figure 16

Figure 17

Figure 18

Figure 19

Figure 20

Figure 21

## RÉFÉRENCES CITÉES DANS LA DESCRIPTION

**Documents brevets cités dans la description**

- FR 2786266
- EP 800055 A
- US 4639667 A
- WO 9716736 A
- WO 2008138662 A
- US 6175233 B
- US 7421923 B
- US 7293480 B

- FR 2898189
- FR 2909170
- US 6731108 B
- US 6960974 B
- WO 2004015375 A
- US 20070242043 A
- US 20090062064 A